# EUROPEAN PATENT APPLICATION

(11) **EP 1 732 037 A2**
(43) Date of publication of application: **13.12.2006**
(21) Application number: 06252894.8
(22) Date of filing: 05.06.2006
(51) Int. Cl.: G06Q 30/00

(54) **Customer care network with automatic callback to subscriber**

(30) Priority: 07.06.2005 US 688508 P; 04.04.2006 US 397187
(71) Applicant: Bitfone Corporation, Laguna Niguel, CA 92677 (US)
(72) Inventor: Rao, Bindu Rama, Laguna Niguel, California 92677 (US)
(74) Representative: McLeish, Nicholas Alistair Maxwell

(57) **Abstract**

A customer care network supports a "customer callback" feature, wherein customer or device registers for customer care service and a customer care representative calls back to provide a service to the customer. This approach makes it unnecessary for a customer to wait in a queue to talk to a customer care representative. If a customer care representative is not immediately available, the customer may be notified of a later callback time. The customer may request customer care via a dedicated button or key sequence on the electronic device, or via a web page of a self-care portal, and may be notified of a later callback time using messaging to the electronic device, or via the web page of the self-care portal. A customer care representative may be provided with device profile information from the electronic device, or retrieved from within the customer care network, before the callback to the customer. This enables the customer care representative to avoid lengthy questioning of the customer, and to diagnose possible problems in the electronic device before contacting the customer.

## Description

### BACKGROUND OF THE INVENTION

Electronic devices, such as mobile phones and personal digital assistants (PDA's), often contain firmware and application software that are either provided by the manufacturers of the electronic devices, by telecommunication carriers, or by third parties. If firmware or firmware components are to be changed in electronic devices, it is often very tricky to update the firmware components.

It is often difficult to determine what is wrong with a device when a problem is encountered. Quite often, a customer care representative for an operator does not have answers to a customer's problem and is not able to fix it. Determination of problems with a customer's mobile device is a big challenge for operators. Answering customer care calls is quite expensive, and often at the end of such a call, the customer care representative is unable to determine what is wrong with the device.

Different devices have different sets of resources, different sets of parameters, etc. Managing mobile devices in a heterogeneous network is a huge problem. Figuring out what parameters need to be set in a given electronic device is also a problem.

Customer care centers get numerous calls for support from customers. They have very few means to determine what is wrong with the customer electronic device. The Customer Care Representative (CCR) often asks questions of a customer, but they do not always get proper answers. Customers often do not know what is wrong with their electronic device. Thus, configuration changes that can fix a problem cannot be easily determined. Again, firmware updates that can fix the problem cannot be identified.

Quite often, even when a problem is diagnosed, a solution may not be available. Thus, customers who call to report a problem are often left without a solution. Each call to a customer care center typically takes several minutes and often a customer waits in a "queue" until a CCR becomes free to take his call. The next few minutes are then spent just asking questions and collecting device and customer information, etc. Thus, customer care calls can take over 20 minutes, even when a problem cannot be determined or a solution provided.

If an operator needs to handle millions of customer care calls, such as when a firmware bug exists in a new device, it is very expensive and takes significant resources to handle the customer care calls.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A device, system and/or method supporting automatic callback to subscribers with electronic devices, substantially as shown in and/or described in connection with at least one of the figures, as set forth more completely in the claims.

These and other advantages and novel features of the present invention, as well as details of an illustrated embodiment thereof will be more fully understood from the following description and drawings.

### BRIEF DESCRIPTION OF SEVERAL VIEWS OF THE DRAWINGS

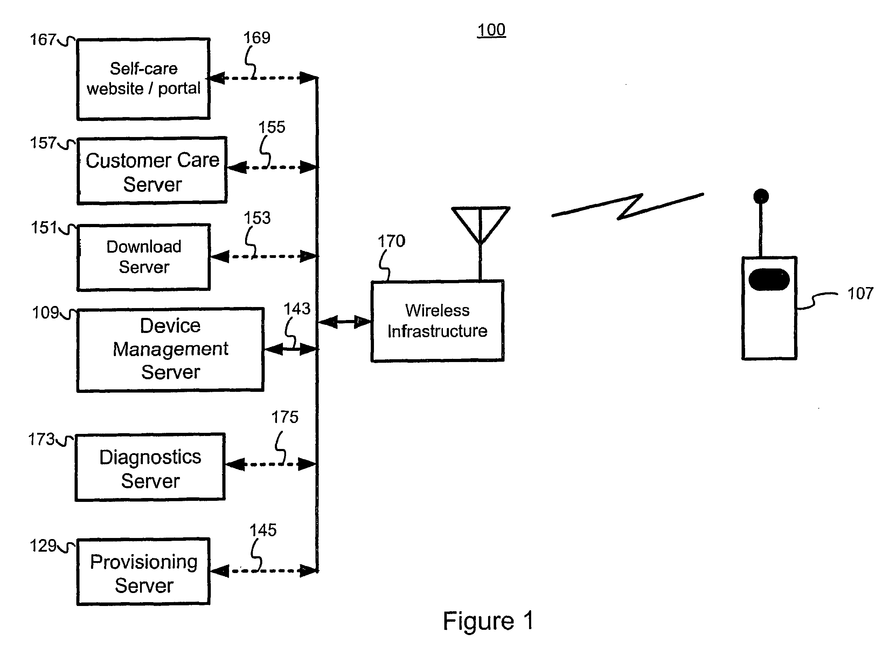

Figure 1 shows a communication network supporting management of an electronic device served via a wireless infrastructure, in which a representative embodiment of the present invention may be practiced.

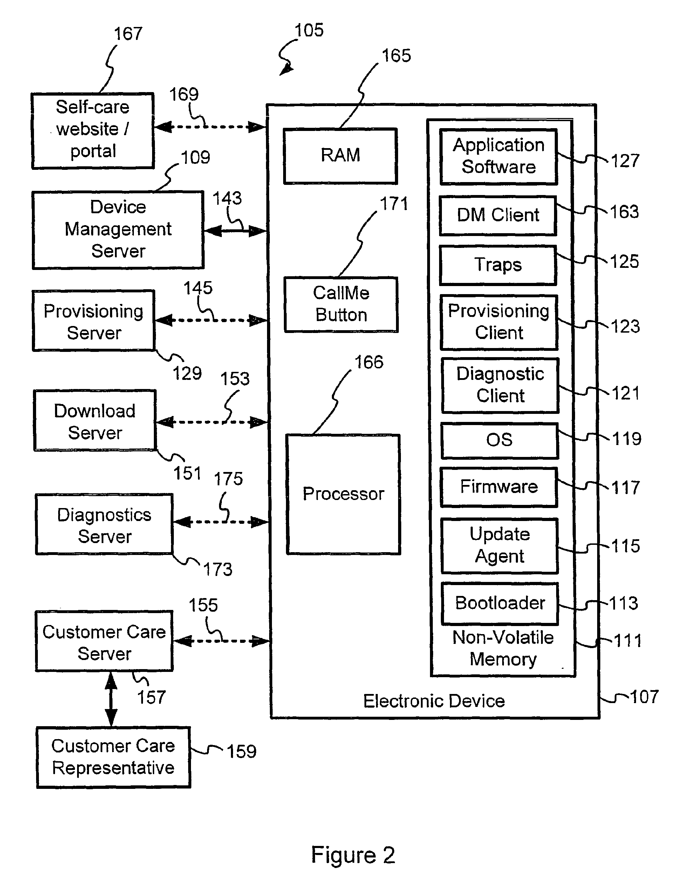

Figure 2 is a perspective block diagram of an exemplary network that supports customer care using callbacks to a user of an electronic device that may correspond to, for example, the electronic device of Figure 1, in accordance with a representative embodiment of the present invention.

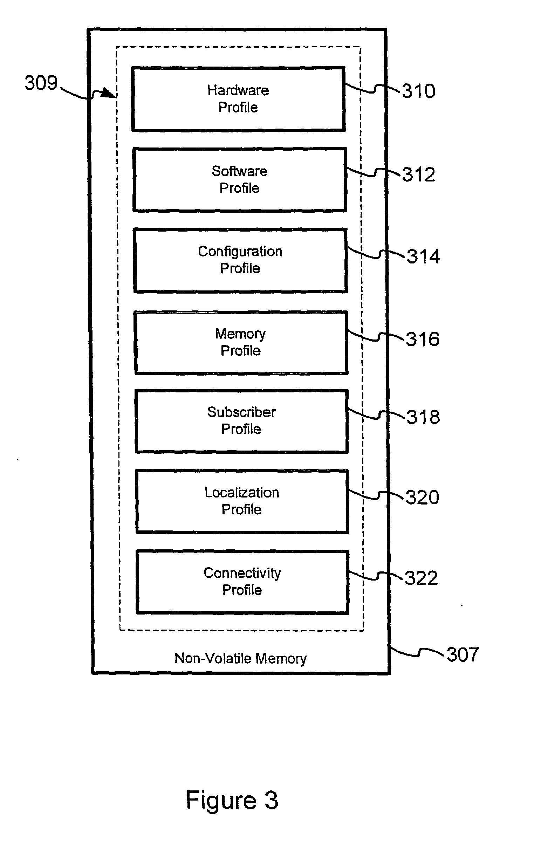

Figure 3 shows a block diagram illustrating the structure of an exemplary device profile resident in the non-volatile memory of an electronic device that may correspond to, for example, the electronic device of Figure 2, in accordance with a representative embodiment of the present invention.

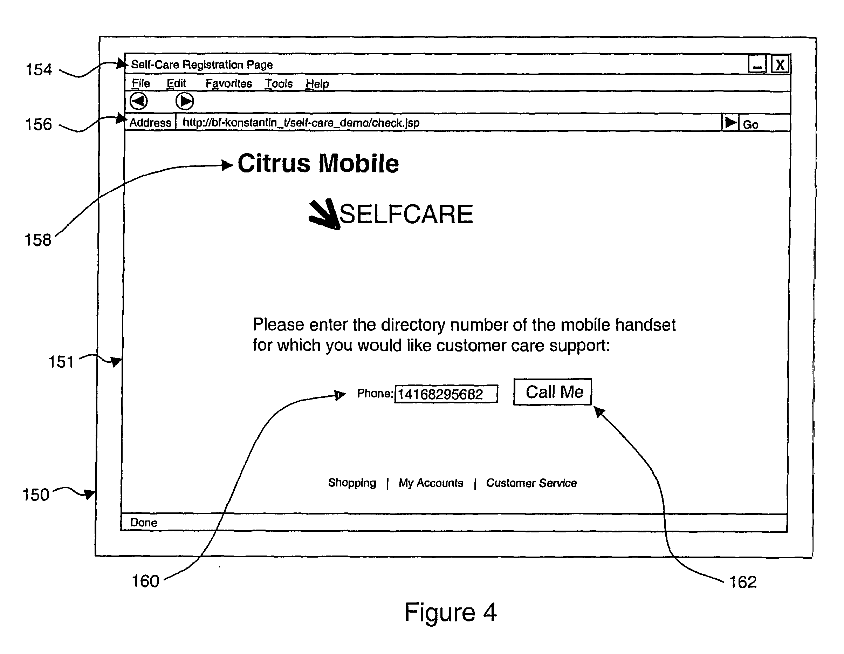

Figure 4 is an illustration of a display of a personal computer showing an exemplary self-care web page of a self-care website/portal that may correspond to, for example, the self-care website/portal of Figure 2, having a CallMe button that enables customer/user registration for customer care, in accordance with a representative embodiment of the present invention.

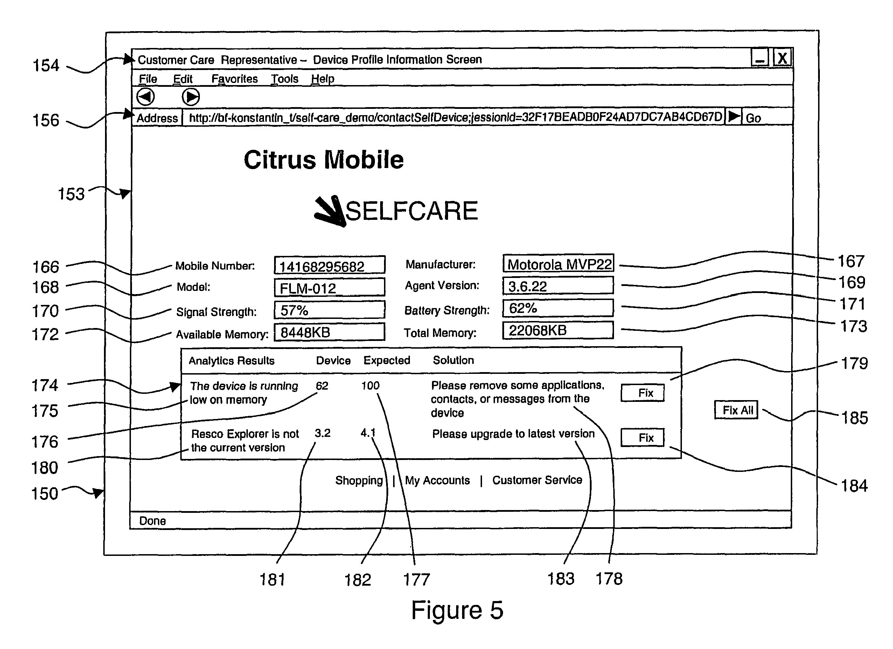

Figure 5 is an illustration of a display screen showing an exemplary customer care representative screen that may be presented to a customer care representative by a customer care server corresponding to, for example, the CCR and customer care server of Figure 2, upon call back to a customer/user following registration for customer care service, in accordance with a representative embodiment of the present invention.

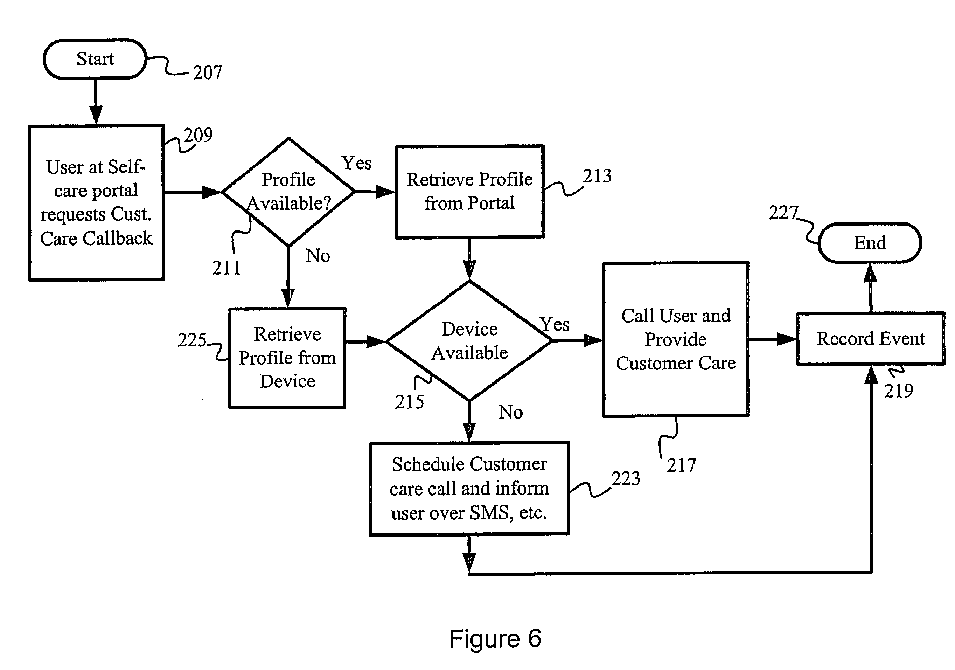

Figure 6 is a flow chart of an exemplary method of operating a customer care network such as, for example, the customer care network of Figure 2, as it facilitates a request for customer care services by a customer/subscriber at a self-care website/portal such as the self-care website/portal of Figure 2, in accordance with a representative embodiment of the present invention.

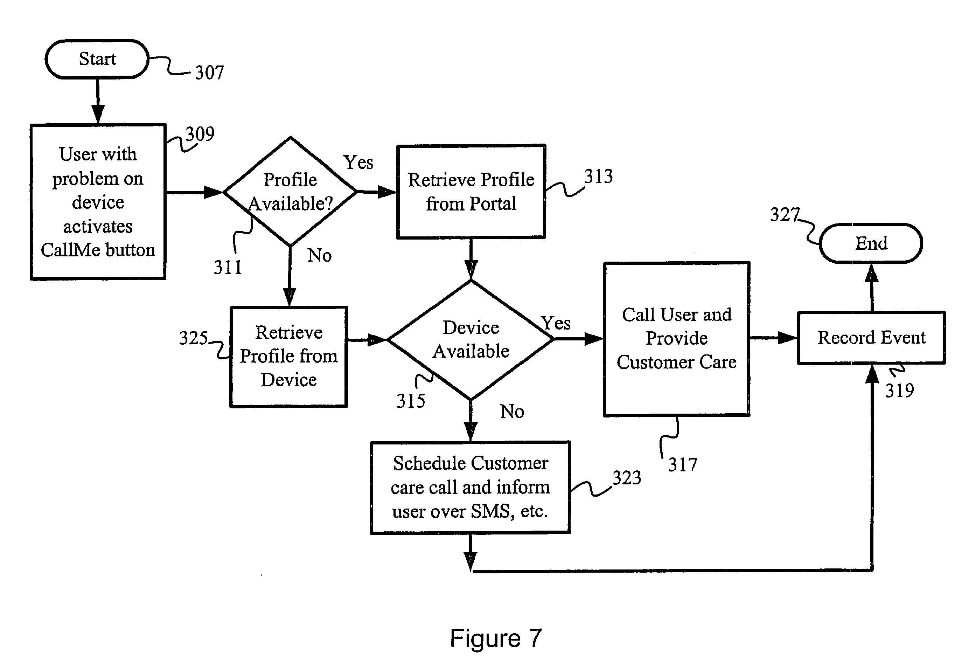

Figure 7 is a flowchart of an exemplary method of operating a customer care network such as, for example, the customer care network of Figure 2, as it facilitates a request for customer care service from a customer/subscriber entering a pre-defined key sequence or activating a dedicated "CallMe" button on an electronic device such as, for example, the CallMe button of the electronic device of Figure 2, in accordance with a representative embodiment of the present invention.

### DETAILED DESCRIPTION OF THE INVENTION

Aspects of the present invention relate to the configuration, management and updating of configuration parameters, firmware and/or software in a mobile electronic device. More specifically, aspects of the present invention relate to providing customer care support using callbacks to a customer or user requesting help with a mobile device such as for example, a cellular phone, pager, a personal digital assistant, and personal computer that is experiencing problems. Although the present application refers frequently to an electronic device in terms of a cellular phone, a pager, a personal digital assistant, or a personal computer, this does not represent a specific limitation of the present invention. A mobile electronic device for the purposes of the present application may comprise a wide variety of electronic devices having updatable code and/or configuration parameters that may be managed via a wired or wireless communications link using a device client resident in the electronic device. Although the following makes reference to the Open Mobile Alliance (OMA) protocols and specifications, representative embodiments the present invention may be applied in combination with other industry standard protocols.

Figure 1 shows a communication network 100 supporting management of an electronic device 107 served via a wireless infrastructure 170, in which a representative embodiment of the present invention may be practiced. The communication network 100 comprises a customer care server 157 communicatively coupled to the wireless infrastructure 170 via a communication path 155. The customer care server 157 may support the activities of a customer care representative (not shown) using, for example, a dedicated terminal device, or a personal computer having appropriate application software. The communication path 155 may comprise a dedicated wired or wireless communication link such as, for example, an intranet, the Internet, a wired or wireless local area network, a packet network, or any other suitable form of communication link. The communication network 100 may also comprise a self-care website/portal 167 communicatively coupled to the wireless infrastructure 170. The self-care website/portal 167 may permit a subscriber having electronic device 107 to diagnose, provision, and update the electronic device 107 via, for example, a wired or wireless communication path 169 that may include, for example, any of the communication means described above with respect to communication path 155.

The communication network 100 also comprises a provisioning server 129, that may also be referred to herein as a "broadcast server", and a device management (DM) server 109 that may support, for example, an Open Mobile Alliance (OMA) device management (DM) protocol, or a proprietary protocol. The communication network 100 also comprises a download server 151 for downloading update packages to the electronic device 107. In a representative embodiment of the present invention, an update package may, among other things, comprise a set of instructions executable by an update agent in the electronic device 107 to convert or transform an existing version of software and/or firmware code to an updated version.

As shown in the illustration of Figure 1, the self-care website/portal 167, the customer care server 157, the provisioning server 129, a DM server 109, a diagnostics server 173 and the download server 151 may be communicatively coupled via respective communication paths 169, 155, 145, 143, 175, and 153 to the wireless infrastructure 170. Although shown as separate entities, the self-care website/portal 167, the customer care server 157, the provisioning server 129, the DM server 109, the diagnostics server 173 and the download server 151 may reside on a single server, or on multiple servers co-located or separately located, depending upon anticipated load, economics, server capability, etc. The communication paths 169, 145, 143, 175 and 153 may comprise any of the communication links described above with respect to the communication path 155. The wireless infrastructure 170, in a representative embodiment of the present invention, may comprise, for example, a cellular network, a paging network, a wireless local and/or wide area network, or other suitable wireless communication network. Although the wireless infrastructure 170 is shown as a single entity having a single antenna location, this does not represent a specific limitation of the present invention. A greater number of antenna locations including those belonging to separate services providers may be employed, without departing from the scope of the present invention.

Figure 2 is a perspective block diagram of an exemplary network 105 that supports customer care using callbacks to a user of an electronic device that may correspond to, for example, the electronic device 107 of Figure 1, in accordance with a representative embodiment of the present invention. The network 105 may enable mass distribution of firmware and/or software updates to fix problems that have been diagnosed within electronic devices such as the electronic device 107 of Figure 2, for example. As illustrated in Figure 2, the network 105 comprises a self-care website/portal 167, a device management (DM) server 109, a diagnostics server 173, a customer care server 157, a download server 151, and a provisioning server 129, that may correspond to, for example, the self-care website/portal 167, DM server 109, diagnostics server 173, customer care server 157, download server 151 and provisioning server 129 of Figure 1. Although not shown in Figure 2, the self-care website/portal 167, device management (DM) server 109, diagnostics server 173, customer care server 157, download server 151, and provisioning server 129 may be communicatively coupled to enable the self-care website/portal 167, device management (DM) server 109, diagnostics server 173, customer care server 157, download server 151, and provisioning server 129 to cooperate in providing management/diagnostic services and functions for the electronic device 107. The electronic device 107 may comprise any of a number of different portable/handheld/mobile electronic devices such as, for example, a cellular phone, a personal digital assistant, a pager, and a personal computer, to name only a few. In a representative embodiment of the present invention, the electronic device 107 may include non-volatile memory 111 that may, for example, comprise NAND or NOR flash memory, battery-backed memory, electrically programmable read-only memory (EPROM), or various other suitable forms of non-volatile memory. The non-volatile memory 111 of the electronic device 107 shown in Figure 2 comprises a number of firmware/software components including application software 127, a device management (DM) client 163, a traps client 125, a provisioning client 123, a diagnostic client 121, an operating system (O/S) 119, firmware 117, an update agent 115, and a boot loader 113. The electronic device 107 also comprises a random access memory 165.

In a representative embodiment of the present invention, the electronic device 107 may be capable of updating portions of the non-volatile memory 111 in the electronic device 107 such as, for example, the application software 127, operating system (OS) 119, or firmware 117, by employing an update package (not shown) delivered by, for example, the download server 151 via communication path 153. An update package used for updating the electronic device 107 may be produced by a generator (not shown), and may comprise a set of instructions executable by the electronic device 107 to convert/transform an existing code version to an updated code version in the memory of the electronic device 107. Additional details of the generation and application of update packages may be found in the PCT Application with publication number WO/02/41147 A1, PCT number PCT/US01/44034, filed November 19, 2001, and in United States Provisional Patent Application Serial No. 60/249,606, filed November 17, 2000. As described above with respect to Figure 1, the communication path 153 may comprise wired or wireless communication links including, for example, packet networks, circuit switched networks, cellular or paging networks, local or wide area networks, and other suitable forms of communication networks.

In a representative embodiment of the present invention, the electronic device 107 may receive provisioning information from the customer care server 157 or the provisioning server 129, to correct configuration problems or to reconfigure software and hardware. The electronic device 107 may apply updates using one or more update agents 115 that are each capable of processing update packages or portions/subsets thereof. The electronic device 107 may receive update packages, and update the memory of the electronic device 107 using the update agent(s) 115. The update agent(s) 115 may be capable of updating any of the firmware and/or software in the electronic device 107 including, for example, the diagnostic client 121 that facilitates remote diagnosis, and a traps client 125 that facilitates setting traps and retrieving collected information.

As shown in Figure 2, the electronic device 107 may comprise a DM client 163 that is capable of interacting with, for example, the DM server 109, the provisioning client 123, the diagnostic client 121 and the traps client 125. In a representative embodiment of the present invention, the DM client 163 may receive device management commands from, for example, the DM server 109, and may implement the received DM commands on the electronic device 107. The DM commands may, for example, comprise elements of the OMA Device Management (DM) protocol being developed under the auspices of the Open Mobile Alliance Ltd. Such protocol elements may support the management (e.g., creation, setting, updating, retrieving, and deletion) of information stored as management objects in a device management structure (e.g., a device management (DM) tree) in the memory of the electronic device 107.

In a representative embodiment of the present invention, a download server such as, for example, the download server 151 of Figure 2 may download firmware and/or software updates (e.g., within update packages) to the electronic device 107 via the communication path 153, for later application to the memory of the electronic device 107. A customer care server 157 may facilitate access to information (e.g., code, parameters and data) contained within the electronic device 107, by customer care representative (CCR) 159. Although only one customer care representative 159 is shown in Figure 2, a greater number of customer care representatives may be supported by the customer care server 157, without departing from the scope of the present invention.

A representative embodiment of the present invention may comprise a provisioning server 129 that may be used to facilitate communication of provisioning information (e.g., service-related parameters, device-parameters, user preferences), using, for example, an over the air (OTA) delivery mechanism via the communication path 145. The communication path 145 may, for example, comprise any suitable wired or wireless communication link including, for example, those described above with respect to communication path 153.

Although the communications paths 143, 145, 153, 155, 169 are shown as being separate, this is not a specific limitation of the present invention. The functionality of any of the self-care website/portal 167, device management (DM) server 109, customer care server 157, download server 151, and provisioning server 129 may be combined on a single or cluster of servers, and may be communicatively coupled to any of the other of the self-care website/portal 167, device management (DM) server 109, customer care server 157, download server 151, and provisioning server 129.

When a CCR such as the CCR 159 wishes to diagnose a problem with an electronic device such as the electronic device 107, for example, the CCR 159 may retrieve various configuration values, parameters, etc. from the electronic device 107, one at a time. In a representative embodiment of the present invention, the CCR 159 may instead elect to retrieve a device profile comprising a larger set of information from the electronic device 107.

In a representative embodiment of the present invention, a customer care representative such as, for example, customer care representative 159 of Figure 2 may, with the help of the customer care server 157, initiate the collection of quality-of-service (QoS) related parameters from the electronic device 107, when the user of the electronic device 107 calls the customer care representative 159 to report a problem with the electronic device 107. The customer care server 157 may facilitate collection of, for example, fault incidence and repair information, fault incidence information, time taken to clear a fault, and accumulated down time of a device or service, to name only a few such QoS parameters. The customer care server 157 may also facilitate collection from the electronic device 107 of information related to, for example, network performance, call success rate within the network, service access delay information, call drop rate, and percentage of connections with good voice quality, to name only a few network-related QoS parameters.

In one representative embodiment of the present invention, the user/subscriber may be provided with the ability to go to a self-care website/portal such as, for example, the self-care website/portal 167 of Figure 2, to update a device profile, to provide subscriber information, and to access details of downloaded/downloadable software, for example. All such information provided by a user, or retrieved from an electronic device (e.g., electronic device 107 of Figure 2) during a self-care portal interaction, may subsequently be accessed by a customer care server such as, for example, the customer care system 157. In a representative embodiment of the present invention, whenever a user contacts a customer care representative (e.g., CCR 159 of Figure 2) and the customer care system 157 is able to interact with the electronic device of the caller, the customer care system 157 may automatically retrieve data previously entered and collected during a self-care activity at a self-care website/portal such as the self-care website/portal 167 shown in Figure 2.

In a network in accordance with a representative embodiment of the present invention, the user of an electronic device such as the electronic device 107, for example, may employ a self-care website/portal like the self-care website/portal 169 to administer self-care and conduct diagnostics of the electronic device 107. During a subsequent user call to a customer care representative, the customer care representative may use such information collected during user self-care activities, when interacting with the user of the electronic device 107.

In a representative embodiment of the present invention, the customer care network 105, that may correspond to, for example, the communication network 100 of Figure 1, may support a "customer callback" feature in which a customer having an electronic device 107 registers for customer care service. A customer care representative (CCR) such as the customer care representative 159 of Figure 2 may automatically call a customer back following registration by the customer, to provide customer care service to the customer. This aspect of a representative embodiment of the present invention makes it unnecessary for a customer to dial into a customer service number and wait in a queue to talk to a CCR. A customer care network such as the customer care network 105 of Figure 2 supports customer care calls by a customer/subscriber with an electronic device such as, for example, the electronic device 107, who might be having problems with operation of the electronic device 107, and may need help in diagnosing the problems and finding appropriate solutions.

As shown in Figure 2, the customer care network 105 comprises a device management (DM) server 109, a customer care server 157, a download server 151, an electronic device 107, and a provisioning server 129. The electronic device 107 is capable of updating application software 127, an operating system (OS) 119, or a firmware 117, for example, in the electronic device 107, employing an update package delivered by the download server 151. The electronic device 107 is also capable of receiving provisioning information from, for example, the customer care server 157 or the provisioning server 129, to fix configuration problems or reconfigure software and hardware in the electronic device 107. The electronic device 107 is capable of applying received updates using one or more update agents 115, that are each capable of processing update packages or subsets thereof. The electronic device 107 is capable of receiving such update packages via, for example, a wired or wireless communication path such as a cellular network, a paging network, and a wireless local or wide area network, to name only a few examples. The electronic device 107 comprises the update agent(s) 115 capable of updating the electronic device 107, a diagnostic client 121 that facilitates remote diagnosis of problems with operation of the electronic device, and a traps client 125 that facilitates setting traps and retrieving collected information. The electronic device 107 also comprises a device management (DM) client 163 that is capable of interacting with the provisioning client 123, the diagnostic client 121 and the traps client 125. The DM client 163 in a representative embodiment of the present invention may receive DM commands from, for example, the DM server 109 and implement them in the electronic device 107. The download server 151 may be used to download firmware and software updates for updating the electronic device 107.

In a representative embodiment of the present invention, the customer care server 157 may facilitate access to information in an electronic device such as, for example, the electronic device 107 by customer care representatives (CCR). When a CCR needs to diagnose a problem with the electronic device 107, the CCR may, for example, retrieve various configuration values and parameters from the electronic device 107. The retrieval of such configuration values and parameters may be done one at a time. In accordance with a representative embodiment of the present invention, the CCR may, instead, retrieve a device profile that provides a large set of information from the electronic device 107 that may be referred to as a "device profile". A device profile in accordance with a representative embodiment of the present invention may comprise, for example, a hardware profile, a software profile, a configuration profile, a memory profile, a subscriber profile, a localization profile, and a connectivity profile. In addition, the electronic device may be capable of communicating such a device profile automatically to a customer care server such as, for example, the customer care server 157, when a customer/subscriber activates a user input such as the CallMe button 171 of Figure 2. Such a user input device may be provided on the electronic device 107 to allow a user to automatically register for customer care service. The use of automatic registration for service in accordance with a representative embodiment of the present invention eliminates the need for the customer to dial into a customer care service (e.g., using "800", "866", or "877" numbers), and to spend time waiting for a CCR to become free to handle their call. A representative embodiment of the present invention may automatically provide device and subscriber information to a CCR such as, for example, the CCR 159 of Figure 2, by means of a device profile that is communicated to the customer care server 157. The use of a representative embodiment of the present invention makes it unnecessary for a CCR such as the CCR 159 to ask a series of questions, to spend significant and costly time to determine particulars of an electronic device such as the electronic device 107 of Figure 2, and to determine a profile of the firmware and applications on the electronic device such as the application software 127, OS 119, firmware 117, and update agent 115, for example.

A representative embodiment of the present invention makes it possible to retrieve a complete set of profile information in the form of a device profile, in a single communication session. Such a representative embodiment may make it available to a CCR such as, for example, the CCR 159 of Figure 2, ahead of time, instead of employing several individual DM or other communication sessions during, or subsequent to, a call to a customer care representative by a customer/user of an electronic device such as the electronic device 107. In addition, the device profile may be communicated to a customer care server such as the customer care server 157, for example, in a single session, in a single package, by the electronic device 107. This may be initiated when a user input such as the CallMe button 171 of Figure 2 (or some other button or button sequence with the same functionality assigned to it), is invoked. In one a representative embodiment of the present invention, the device profile may be retrieved by the DM client 163 and communicated to the customer care server 157 via the DM server 109. In another representative embodiment, the device profile may be communicated over an SMS means available to the device 107.

Figure 3 shows a block diagram illustrating the structure of an exemplary device profile 309 resident in the non-volatile memory 307 of an electronic device that may correspond to, for example, the electronic device 107 of Figure 2, in accordance with a representative embodiment of the present invention. As is illustrated in Figure 3, such a device profile 309 may comprise a hardware profile 310, a software profile 312, a configuration profile 314, a memory profile 316, a subscriber profile 318, a localization profile 320, and a connectivity profile 322. The device profile 309 may also comprise additional profile components, without departing from the scope of the present invention. For example, a device profile in accordance with the present invention may comprise the DevInfo and DevDetail elements in the OMA DM Specification. In this manner, a device profile of a representative embodiment of the present invention such as, for example, the device profile 309 of Figure 3, may facilitate retrieval of multiple individual profiles stored in an electronic device, in a single DM session, as a single package, instead of employing several different individual DM sessions to retrieve this set of information.

For example, when a CCR (e.g., the CCR 159) receives a call from the user of an electronic device such as, for example, the electronic device 107, the customer care server 157 may be used by the CCR to a) set parameters in the electronic device 107 to solve a problem in the electronic device 107, b) automatically turn on collection of one or more quality of service (QoS) parameters from the electronic device 107, c) set traps to determine, for example, average download time in the electronic device 107, average number of dropped packages per download, average number of attempts per successful download and/or d) retrieve collected data from traps and other device-related information from the electronic device 107 during the call to the CCR from the user of the electronic device 107. In a representative embodiment of the present invention, when the network 105 determines, for example, that an electronic device 107 is in the vicinity of a fixed set of routes (e.g., main roads and towns) based on a determination of the location of the electronic device 107, during a predetermined-monthly cycle, it may cause the electronic device 107 to, for example, collect data, establish a voice or data call for a specific duration, etc. (e.g., involving mobile originating or mobile termination) During the call, the electronic device 107 may measure QoS parameters such as, for example, failure to set up a call, failure to maintain the call, or collect information for the required duration (e.g., 2 minutes). In a representative embodiment of the present invention, while the CCR receives a call from the user of the electronic device 107 to report a problem, the customer care server 157 may provide the CCR with a drop down list of QoS-related parameters that may be collected from the electronic device 107, providing the CCR with the opportunity to turn on the collection of the QoS parameters from the electronic device 107 for some duration such as, for example, a month.

The network 105 in a representative embodiment of the present invention may support mass distribution of firmware and software updates using methods employed by the device management server 109 or the customer care server 157. The network 105 may employ a device management protocol such as, for example, the Open Mobile Alliance (OMA) device management (DM) protocol that may be supported by the DM server 109, for device discovery. The DM server 109 may use an OMA-DM message comprising, for example, a 'Replace' command to set 'configuration' parameters used to fix bugs in software or firmware. In a representative embodiment of the present invention, an update agent/client such as, for example the update agent/client 115 of Figure 2 may update the electronic device 107 using update packages that are retrieved based on a parameters set. An update package may, for example, comprise information used to convert/transform a first version of software/firmware to an updated version of software/firmware. The electronic device 107 may ensure that update packages received are not corrupt, and may store them away for subsequent processing. In a representative embodiment of the present invention, a provisioning server like the provisioning server 129, for example, may support provisioning of devices using client provisioning (CP) means and OMA-DM bootstrap provisioning means, and other legacy means. The provisioning server 129 may employ one of several available broadcast means to communicate an update package to a plurality of electronic devices 107 such as, for example, short message service (SMS), multimedia messaging service (MMS), via wireless wide area and local area networks, to name only a few.

In a representative embodiment of the present invention, the customer care server 157 may facilitate access to device profile information like the device profile information 309 of Figure 3, for example, that an electronic device such as the electronic device 107 may provide upon request of the customer care server 157, or upon its own initiative. Such device profile information may be requested for display to a customer care representatives such as CCR 159, or for analysis of potential problems in the electronic device 107. In one representative embodiment of the present invention, the device profile information 309 may comprise a platform-dependent set of parameters, configuration information, hardware information, and list of software components, while in another representative embodiment the device profile information 309 may comprise a common, generic set of such data.

In one representative embodiment of the present invention, when a CCR such as the CCR 159 receives a call from a user of the electronic device 107 requesting customer care service, the customer care server 157 may automatically retrieve a device profile such as, for example, the device profile 309 of Figure 3, that is stored in the customer care server 157, and may make the device profile 309 available to the CCR 159 on, for example, a display (e.g., a PC) used by the CCR 159. If the device profile 309 is not already available in the customer care server 157, the device profile 309 may be retrieved from, for example, a self-care website/portal such as the self-care website/portal 167, from alternative databases, or from the electronic device 107.

Although the above discussion of a representative embodiment of the present invention discloses the use of a CallMe button 171 on the electronic device 107, for automatically registering for customer care service and, for example, simultaneously communicating a device profile such as the device profile 309 (or, for example, a subset thereof) to the customer care server 157, this is not a specific limitation of the present invention. It should be understood that another button or a button sequence may be employed to invoke the associated functionality, without departing from the scope of the present invention. For example, in one representative embodiment of the present invention, a combination of the '*' button and the '9' button may be employed to invoke the functionality described above, while in another representative embodiment of the present invention, the customer/user of the electronic device 107 may enter the button sequence "*19" to invoke the desired functionality. Other key combinations or key sequences are also possible and are contemplated.

In a representative embodiment of the present invention, a customer/user of an electronic device such as the electronic device 107, for example, may employ a self-care website/portal such as the self-care website/portal 167 to conduct self-care activities such as to diagnose problems with the electronic device 107, to update content (e.g., applications, firmware, O/S) on the electronic device 107, to backup a device profile (e.g., device profile 309) on the electronic device 107, and to backup or restore configuration information of the electronic device 107. The webpage of a self-care website/portal such as the self-care website/portal 167 may also provide the customer/user with the ability to register for customer care, by providing a CallMe button that, when activated, may register the customer/user or electronic device 107 for customer care service with the customer care server 157.

Figure 4 is an illustration of a display 150 of a personal computer showing an exemplary self-care web page 151 of a self-care website/portal that may correspond to, for example, the self-care website/portal 167 of Figure 2, having a CallMe button 162 that enables customer/user registration for customer care, in accordance with a representative embodiment of the present invention. The self-care web page 151 comprises a page label 154 identifying the web page, a universal resource locator 156 of the location of the web page, a service provider name 158 identifying the service provider for which customer care is provided, and a mobile identifier 160 used to identify an electronic device such as, for example, the electronic device 107 of Figure 2, for which customer care is desired. Although in the example of Figure 4 the mobile identifier 160 is a directory number for a mobile handset, this does not represent a specific limitation of the present invention. Other identifiers such as, for example, an international mobile equipment identity (IMEI), an electronic serial number (ESN), an international mobile station identity (IMSI) or other similar unique identifiers may be employed.

In a representative embodiment of the present invention, the activation of the CallMe button 162 shown in Figure 4 may register the customer/user of an electronic device such as the electronic device 107, which is identified by the mobile identifier 160, for example, for a customer care callback from a CCR such as the CCR 159 of Figure 2. In addition to transferring the mobile identifier 160, the activation of the CallMe button 162 may transfer a device profile such as the device profile 309 of Figure 3, for example, to a customer care server (e.g., the customer care server 157) for use by the CCR 159. In this manner, the customer/user of the electronic device 107 may avoid having to dial into a customer care center to get help, to wait on queue for a CCR, and to go through a sometimes lengthy and confusing question and answer session with the CCR. Instead, the activation of the CallMe button 162 may cause the customer care server 157 to register the customer/user for service, and may automatically queue up the customer for a call back from an available CCR such as, for example, the CCR 159. Thus, when a CCR such as the CCR 159 is found to be free and ready to provide service, the available CCR may be instructed by the customer care server 157 to answer a registered customer's call for customer care, and may be instructed to call the customer/user back (e.g., using the mobile identifier 160). In a representative embodiment of the present invention, a CCR (e.g., CCR 157) may, for example, pick up a registered request for customer care from a customer care server (e.g., the customer care server 157), view a device profile (e.g., via a dedicated terminal or PC with web browser), and then dial the registered customer's/user's electronic device, using a phone number that is provided in the device profile or as part of the information provided at the time of registration for customer care (e.g., the mobile identifier 160). In this manner, a CCR is enabled to provide customer care service to a customer/user without inconveniencing the customer/user by placing them in a service queue (e.g., on hold), and by eliminating or minimizing the information that is asked of the customer/user during the call.

In some representative embodiments of the present invention, a CCR (e.g., the CCR 159) may automatically be assigned to a registered customer care call by automatic call distributor functionality in a customer care server (e.g., customer care server 157). In this way, the next registered customer/user in a queue of customer care requests may be automatically assigned to an idle CCR. The customer care server (e.g., customer care server 157) may automatically present a device profile (e.g., information from the device profile 309 of Figure 3) to the available CCR on a dedicated terminal or on a PC monitor, if such a device profile were available. The CCR may also have the ability to retrieve a device profile and additional information from a database associated with a self-care website/portal such as, for example, the self-care website/portal 167 of Figure 2.

Figure 5 is an illustration of a display screen 150 showing an exemplary customer care representative screen 153 that may be presented to a customer care representative by a customer care server corresponding to, for example, the CCR 159 and customer care server 157 of Figure 2, upon call back to a customer/user following registration for customer care service, in accordance with a representative embodiment of the present invention. In the example of Figure 5, the customer/user has activated a link or command button on a web page such as, for example, the CallMe button 162 of Figure 4. The illustration of Figure 5 shows a display screen 150 containing an exemplary web page 153 displaying device profile information such as that described above with respect to Figure 3, following the retrieval of the device profile information from a subscriber mobile device such as, for example, the electronic device 107 of Figure 2, in accordance with a representative embodiment of the present invention. The exemplary web page 153 of Figure 5 comprises a web page name 154 "Customer Care Representative - Device Profile Information Screen" that identifies the new web page being viewed, and an Internet universal resource locator (URL) 156 that shows the new location now being accessed. The device profile information shown on the web page 153 may comprise a portion of the device profile retrieved from a customer care server such as, for example, the customer care server 157 of Figure 2, or from the electronic device 107, and may contain a number of items of information that are normally not accessible to a customer and that must normally be accessed by a customer service representative. The operator of the web portal (e.g., the wireless service provider operating wireless infrastructure 170 of Figure 2, or a third party (not shown) that provides customer care services for the subscribers of wireless service provider operating wireless infrastructure 170) may determine which items of the device profile information retrieved from the mobile device (or from a database associated with, for example, the customer care server 157, or self-care website/portal 167) are made available to the customer care representative.

As shown in the example web page 153 of Figure 5, a representative embodiment of the present invention may provide device profile information including: a mobile number field 166 that identifies the mobile electronic device, a manufacturer field 167 that identifies the maker of the mobile electronic device, and a mobile model field 168 that identifies the model of the mobile electronic device. The device profile information web page 153 of Figure 5 also includes an agent version field 169 that identifies the software/firmware version of a device agent such as, for example, the update agent 115 of Figure 2, which may be resident in the mobile electronic device. A signal strength field 170 may be presented to inform the customer care representative of the present signal strength received at either or both of the mobile electronic device and the current serving base station. A battery strength indication 171 may be provided to help determine whether the battery of the electronic device is in need of charging, whether the battery is failing, or if sufficient battery capacity is available to allow updates of mobile electronic device software or firmware, and provisioning of parameters and data. A representative embodiment of the present invention may also include an available memory field 172 and a total memory field 173, to allow the customer care representative to determine whether sufficient space is available for an update or upgrade, and whether additional memory may be added via, for example, a memory module or subscriber identification module (SIM) card.

In a representative embodiment of the present invention, some items of information may be made available to a customer care representative that may not have previously been available to a customer care representatives using the prior art. For example, a device management client such as the DM client 163 of Figure 2 may have access to all of the contents of memory of an electronic device (e.g., electronic device 107), and may provide such information to a customer care server such as the customer care server 157 of Figure 2, upon request. Although a large number of items may be contained in the device profile information received by the customer care server 157, the actual information items displayed to a customer care representative by a representative embodiment of the present invention may be considerably less, may be configurable by the operator of the customer care server 157 used to render service to a customer/user/subscriber, and may be combined with other, non-device profile information such as, for example, call history information (e.g., location and conditions during call origination, and at the time of dropped calls).

A customer care server in accordance with a representative embodiment of the present invention may employ a rule-based analytics engine. Additional details of such a rule based analytics engine may be found in United States Patent Application Serial No. 11/352,702, entitled "NETWORK FOR CUSTOMER CARE AND DISTRIBUTION OF FIRMWARE AND SOFTWARE UPDATES" (Attorney Docket No. 16554US02), filed February 13, 2006. Such an analytics engine may notify a subscriber of mobile device conditions that may be possible symptoms of current trouble, or that may cause future problems. The illustration of Figure 5 shows an analysis portion 174 that may be generated by such an analytics engine. The analysis portion 174 shown in Figure 5 contains an entry 175 in the results field that indicates the mobile electronic device (e.g., electronic deice 107 of Figure 2) may be running low on memory. The rules used to arrive at such a conclusion may, for example, be defined by the operator of the wireless infrastructure 170 of Figure 2 and/or by the manufacturer of the electronic device 107. In the illustration of Figure 5, the retrieved device profile information indicates that 62 units of memory 176 were found to be available, while the expected level of available memory 177 is shown to be 100 units. A recommended solution 178 to the variance from the applicable rule(s) indicates that removal of applications, contacts or messages is suggested. The customer care representative viewing the customer care representative screen 153 may click on the "Fix" button 179 to attempt a fix of the respective problem. The illustration of Figure 5 also shows a second entry 180 in the results field that indicates that one of the software/firmware items in the mobile electronic device is not the current version. The current device version is shown as version 3.2 181, and the expected version is shown as version 4.1 182. A suggestion 183 to resolve the variance from the rules requests that the version be upgraded to the latest version. The CCR (e.g., CCR 159 of Figure 2) may follow the suggested resolution by clicking on "Fix" button 184. In this instance, a "fix" may comprise the automatic upgrading/updating of the existing software/firmware from the prior version (i.e., version 3.2) to the most recent version (i.e., version 4.1). The web page 153 shown in Figure 5 also permits the CCR to request that a fix of all problems be attempted by clicking on a "Fix All" button 185. A representative embodiment of the present invention permits a CCR to avoid the lengthy delays that may occur when a subscriber visits a retail service location of a wireless service provider, and the long queuing times and complex menus that may be presented to subscribers calling typical customer service help lines for wireless problem resolution assistance.

As described above, the customer care server 157 of a representative embodiment of the present invention may be used by a CCR to, for example, a) set parameters in the electronic device 107 to solve a problem in the electronic device 107 that is reported by the customer/user, b) turn on automatic collection of one or more quality of service (QoS) parameters in the electronic device 107, c) set traps to, for example, determine average download time in the electronic device 107, average number of dropped packages per download, average number of attempts per successful download, and d) retrieve collected data from traps and other device related information from the electronic device 107 during the call to the CCR from the user of the electronic device.

Figure 6 is a flow chart of an exemplary method of operating a customer care network such as, for example, the customer care network 105 of Figure 2, as it facilitates a request for customer care services by a customer/subscriber at a self-care website/portal such as the self-care website/portal 167 of Figure 2, in accordance with a representative embodiment of the present invention. In order to more clearly illustrate the operation of such a network, the following description makes reference to elements of Figures 2 through 5. The method of Figure 6 begins when the customer/user browses to a self-care portal such as, for example, the self-care website/portal 167 of Figure 2, to conduct self-care operations on an electronic device such as, for example, the backup and restoration of content, configuration information or user data; the update of firmware/software; and the performance of remote diagnostics, to name only a few. The customer/user may, for example, access such a website/portal via the Internet, employing a web browser application running on a PC. One example of a suitable web browser application is the Internet Explorer web browser available from Microsoft Corporation.

At block 209, the customer/user at the self-care website/portal may decide to request a customer care call back, due to problems experienced with an electronic device such as the electronic device 107 of Figure 2, for example. Such problems may include loss of service, dropped calls, a failure of the electronic device 107 during a call, a malfunctioning application on the electronic device, to name only a few examples. The customer/user may request customer service automatically, utilizing an input device presented at a self-care portal such as, for example, the CallMe button 162 shown in the exemplary webpage of Figure 4.

Next, at block 211, the self-care portal may determine whether a device profile is available for the electronic device (e.g., the electronic device 107) of the registered customer/user. In one representative embodiment of the present invention, availability of a suitable device profile may be determined by checking the self-care website/portal, an associated database, and a customer care server such as the customer care server 157, for example. If it is determined that a device profile is available for the electronic device 107 then, at block 213, the device profile may be retrieved from the self-care website/portal (e.g., self-care website/portal 167) and presented to the next available CCR (e.g., CCR 159), for use in providing customer care service to the customer/user. At block 215, the CCR (or, for example, the customer care server 157) may determine whether the electronic device 107 is available to accept an incoming call (i.e., to allow the CCR to provide customer care service). The electronic device 107 may currently be in use by the customer (e.g., the customer may be on a voice or data call), therefore it is desirable that this check be performed.

If it is determined, at box 215, that the electronic device 107 is available to accept an incoming call then, at block 217, the customer/user may be called back by the CCR, and customer care service may be provided. As described above, customer care service may comprise updating configuration parameters, updating or upgrading software/firmware, diagnosing problems, to name just a few example actions that may be taken by the CCR. At block 219, the customer care event may be recorded for later reference, and a charge detail record may be created. Then, at block 227, the method of Figure 6 terminates.

If it is determined (at box 215) that the electronic device is currently not available to accept an incoming call (e.g., because the electronic device is turned off, or is currently in use by the customer) then, at block 223, the CCR may create a customer care scheduled service time, and may automatically communicate the scheduled service time to the customer/user using, for example, a short message service (SMS) or email mechanism. In one representative embodiment of the present invention, the customer/user may be expected to be ready to be called back by the CCR for customer care service at the scheduled time. In another representative embodiment, the customer/user of the electronic device 107 may be asked to acknowledge/accept the proposed service time, using a response (e.g., mobile device originated) SMS or email message. In another representative embodiment of the present invention, the customer care server 157 may determine that the electronic device 107 is currently not available accept an incoming call (e.g., it may be powered off or in use by the customer), may automatically schedule a call back from a CCR, and may communicate the customer care service time schedule to both a CCR and the customer/user (e.g., using SMS, email, or another means). Then, at block 219, the customer care event may be recorded, and a charge detail record may be created. Then, at block 227, the method of Figure 6 terminates.

If it is determined (at block 211) that a device profile for the electronic device 107 is not available then, at block 225, a device profile may be retrieved from the electronic device 107. In one representative embodiment of the present invention, this may be performed by a self-care website/portal such as, for example, the self-care website/portal 167 of Figure 2, when the customer requests customer care service (e.g., by activating a CallMe button on the electronic device 107, or on a webpage such as the self-care web page 151 of Figure 4). Such a request may be registered by the self-care website/portal (e.g., at the customer care server 157). The retrieved device profile may be stored and later made available to the CCR handling the customer care service callback. The method of Figure 6 may then continue, at block 215, as described above, when an attempt may be made to determine whether the electronic device 107 is currently available for callback by a CCR.

Figure 7 is a flowchart of an exemplary method of operating a customer care network such as, for example, the customer care network 105 of Figure 2, as it facilitates a request for customer care service from a customer/subscriber entering a pre-defined key sequence or activating a dedicated "CallMe" button on an electronic device such as, for example, the CallMe button 171 of the electronic device 107 of Figure 2, in accordance with a representative embodiment of the present invention. To aid illustration of the operation of such a network, the following description makes reference to elements of Figures 2 through 5. The method of Figure 7 begins at a block 307, when a customer/user of an electronic device such as, for example, the electronic device 107 of Figure 2 discovers a problem with the electronic device 107, or with the service subscribed to, and is in need of customer care support. Next, at block 309, the customer/user using the electronic device 107 may decide to request a customer care call back, using a "CallMe" button that is present on the electronic device, or alternatively, a predefined combination of keys or a specific sequence of keys on the electronic device. Such a CallMe button is illustrated in Figure 2 as CallMe button 171. Customer/user activation of the CallMe button 171 (or a pre-defined key sequence or combination) on the electronic device 107 communicates a customer care service request, causing a message to be sent automatically to, for example, a customer care server such as the customer care server 157. Having received the customer care request, the customer care server 157 may determine, at block 311, whether a device profile such as, for example, the device profile 309 of Figure 3, is available for the electronic device 107. In a representative embodiment of the present invention, a self-care website/portal such as the self-care website/portal 167 (or an associated database), or a customer care server such as the customer care server 157, or both, may determine the availability of a device profile for the electronic device 107.

At block 311, a determination may then be made as to whether a device profile for the electronic device 107 is available (e.g., at the customer care server 157 or the self-care website/portal 167). If it is determined (at block 311) that a device profile is available for the electronic device 107 then, at block 313, the device profile may be retrieved from the self-care website/portal 167 or the customer care server 157. If both the self-care website/portal 167 and the customer care server 157 have a device profile for the electronic device 107, a representative embodiment of the present invention may retrieve the latest (i.e., most recently updated) device profile of multiple device profiles. This may occur, for example, when upon a first occurrence of a problem the user engages in self-care through a self-care website/portal e.g., the self-care website/portal 167), and later requests aid from a CCR working through a customer care server (e.g., the customer care server 157). The retrieved device profile made then be presented to a customer care representative (CCR) who is found to be free and available to provide service to the customer/user. At block 315, the assigned CCR or the customer care server 157 may determine whether the electronic device 107 is available to accept an incoming call, to permit the provision of customer care service. Such a check of availability is desirable, because the electronic device 107 may currently be in use by the customer (e.g., the customer may be engaged in a voice or data call), and be unavailable for customer care representative callback.

If it is determined (at block 315) that the electronic device 107 is available for customer care service callback then, at block 317, the customer/user of the electronic device 107 may be contacted by an assigned CCR, and customer care service may be provided. Then, at block 319, the customer care event may be recorded, and a charge detail record may be created. Then, at block 327, the method of Figure 6 terminates.

If, however, it is determined (at box 315) that the electronic device 107 is currently not available to accept a customer care call (e.g., the electronic device 107 may be in use by the customer) then, at block 323, the CCR (or, for example, the self care website/portal 167 or the customer care server 157) may create a scheduled service time, and may automatically communicate the scheduled service time to the customer over an SMS or email mechanism, for example. In some representative embodiments of the present invention, the customer/user may simply be expected to be available for callback by the CCR, for customer care service at the scheduled service time. In other representative embodiments, the customer may be prompted to acknowledge/accept the scheduled service time, to help insure that customer care service at the scheduled service time is possible. In a representative embodiment of the present invention, a customer care server such as, for example, the customer care server 157 may determine that the electronic device (e.g., electronic device 107) is currently not available (e.g., it may be powered off or in use by the customer), may automatically schedule a call back from a CCR, and may communicates the scheduled service time to both the assigned CCR and to the customer (e.g., over SMS or email, or another path.). Then, at block 319, the customer care event may be recorded, and a charge detail record may be created. Then, at block 327, the method of Figure 7 terminates.

If it is determined (at block 311) that a device profile for the electronic device 107 is not available then, at block 325, a device profile for the electronic device 107 may be retrieved from the electronic device 107. In a representative embodiment of the present invention, the electronic device 107 may do this automatically (e.g., when the customer activates the CallMe button 171). The customer care server 157 may, for example, register such a request for customer care service. Then, the device profile automatically communicated by the electronic device 107, or retrieved by the customer care server 157, may be made available to the CCR. Then, at block 315, a check may be made to determine whether the electronic device 107 is available for call back by a CCR, and the method of Figure 7 may proceed as described above.

Aspects of the present invention may be found in an electronic device supporting communication with a customer care system. In a representative embodiment of the present invention, the electronic device may comprise communication circuitry that enables wireless communication with at least one remote server via a wireless network, and at least one memory containing machine-readable code executable by a processor. The electronic device may also comprise at least one processor operably coupled to the communication circuitry and the at least one memory, and the machine-readable code may comprises a code portion that when activated by a pre-defmed user input, automatically registers the electronic device with the at least one remote server. The registration may initiate a customer care call to the electronic device from a customer care representative, and the electronic device may communicate a device profile to the at least one remote server, during registration. In a representative embodiment of the present invention, the device profile may comprise information about at least one of the following: hardware of the electronic device, application software of the electronic device, an operating system of the electronic device, firmware in the electronic device, memory in the electronic device, a subscriber, localization, connectivity, and usage of the electronic device.

A representative embodiment of the present invention may also comprise an output device for prompting a user, and the electronic device may present a prompt to solicit user permission, before communicating the device profile. The output device may comprise a visual display. The machine-readable code may enable reception of at least one of the following: an update to configuration information, an update to correct a firmware or software error, usage information, and help information, in response to registration for customer service. The electronic device may communicate a subscriber profile to the at least one remote server, during registration, and the electronic device may present a prompt message to solicit user permission before communicating the subscriber profile. Automatic registration, by the electronic device, may be employed to avoid user queuing for access to a customer service representative.

In a representative embodiment of the present invention, the at least one remote server may coordinate a customer care call from a customer care representative associated with the electronic device, in response to the registration, and the customer care representative may be selected by the at least one remote server according to technical expertise. The machine-readable code may enable retrieval of parameters from the electronic device to the at least one remote server, subsequent to registration. The electronic device may also comprise at least one button for accepting user input, and the registration may be activated using the at least one button. In addition, the electronic device may comprise a display comprising at least one user selectable graphical icon, and registration may be activated by selecting one of the at least one user selectable graphical icon. The electronic device may display a scheduled time of the customer care call, following registration, and the scheduled time may be determined by the at least one remote server. The at least one remote server may coordinate placement of the customer care call at the scheduled time. In various representative embodiments of the present invention, the electronic device may comprise one of the following: a cellular telephone, a personal digital assistant, a pager, and a personal computer.

Additional aspects of the present invention may be observed in a self-care portal supporting user self-care of mobile electronic devices. A representative embodiment of the present invention may comprise at least one server communicatively coupled to at least one mobile electronic device, and at least one memory comprising machine-readable code executable by the at least one server, the machine-readable code causing the at least one server to implement at least one web page that allows user self-care of the at least one mobile electronic device. The machine-readable code may enable user registration, via the at least one web page, to solicit a customer service call. The at least one web page may comprise an input device to initiate communication of a device profile from the at least one mobile electronic device to the at least one server, and the input device may comprise one of the following: a user selectable graphic and a keystroke sequence. A representative embodiment of the present invention may also comprise at least one interface for communication with a customer care system. The self-care portal may enable customer registration for customer care via a dedicated web page input device that, when activated, causes registration for customer service with the customer care system, and the self-care portal may communicate a device profile to the customer care system via the at least one interface. The self-care portal may communicate a request, via the at least one interface, to provide customer care service to the at least one mobile electronic device.

In various representative embodiments of the present invention, self-care may comprise one of the following: diagnosis of the at least one mobile electronic device, update of memory in the at least one mobile electronic device, backup of memory of the at least one mobile electronic device, communication of a device profile from the at least one mobile electronic device, and one of the following: backup and restore of configuration information for the at least one mobile electronic device. The customer service call may be queued for a later time, the later time may be communicated to the user performing the registration, and the later time may be communicated using one of the following: the at least one web page and the at least one mobile electronic device. The machine-readable code may enable user registration, via a user input device on the at least one mobile electronic device, to solicit a customer service call, and the user input device may comprise one of the following: a user selectable graphic, a dedicated button, and a keystroke sequence.

Still other aspects of the present invention may be found in a method of providing customer care to an electronic device in a network. Such a method may comprise receiving, from the electronic device, a request for customer care, determining at least one potential problem in the electronic device, based upon the received request, and providing customer care to the customer associated with the electronic device. The method may also comprise communicating details of the at least one potential problem to the electronic device. The communication may comprise establishing a voice call between a customer care system and the electronic device to enable a customer care representative associated with the customer care system to provide customer care to a user of the electronic device. The request for customer care may be initiated by a predefined user action at the electronic device, and the predefined user action may comprise one of the following: selecting a dedicated graphic, activating a predefined key sequence, and activating a dedicated button. The electronic device may determine whether the at least one potential problem is present in the electronic device, before sending the request for customer care. The request for customer care may be accompanied by automatic communication of a device profile, and user permission may be solicited before device profile information is communicated. In various representative embodiments of the present invention, the device profile may comprise information about at least one of the following: hardware of the electronic device, application software of the electronic device, an operating system of the electronic device, firmware in the electronic device, memory in the electronic device, a subscriber, localization, connectivity, and usage of the electronic device.

Accordingly, embodiments of the present invention may be realized in hardware, software, or a combination of hardware and software. Embodiments of the present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

Embodiments of the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. An electronic device supporting communication with a customer care system, the electronic device comprising:
communication circuitry that enables wireless communication with at least one remote server via a wireless network;
at least one memory containing machine-readable code executable by a processor;
at least one processor operably coupled to the communication circuitry and the at least one memory; and
wherein the machine-readable code comprises a code portion that when activated by a pre-defined user input, automatically registers the electronic device with the at least one remote server, the registration initiating a customer care call to the electronic device from a customer care representative.

2. The electronic device according to claim 1, wherein the electronic device communicates a device profile to the at least one remote server, during registration.

3. The electronic device according to claim 2, wherein the device profile comprises information about at least one of the following: hardware of the electronic device, application software of the electronic device, an operating system of the electronic device, firmware in the electronic device, memory in the electronic device, a subscriber, localization, connectivity, and usage of the electronic device.

4. The electronic device according to claim 2, further comprising:
an output device for prompting a user; and
wherein the electronic device presents a prompt to solicit user permission, before communicating the device profile.

5. The electronic device according to claim 4, wherein the output device comprises a visual display.

6. The electronic device according to claim 1, wherein the machine-readable code enables reception of at least one of the following: an update to configuration information, an update to correct a firmware or software error, usage information, and help information, in response to registration for customer service.

7. The electronic device according to claim 1, wherein the electronic device communicates a subscriber profile to the at least one remote server, during registration.

8. The electronic device according to claim 7, wherein the electronic device presents a prompt message to solicit user permission before communicating the subscriber profile.

9. The electronic device according to claim 1, wherein automatic registration, by the electronic device, is employed to avoid user queuing for access to a customer service representative.

10. The electronic device according to claim 1, wherein the at least one remote server coordinates a customer care call from a customer care representative associated with the electronic device, in response to the registration.

11. The electronic device according to claim 10 wherein the customer care representative is selected by the at least one remote server according to technical expertise.

12. The electronic device according to claim 1, wherein the machine-readable code enables retrieval of parameters from the electronic device to the at least one remote server, subsequent to registration.

13. The electronic device according to claim 1, further comprising:
at least one button for accepting user input; and
wherein the registration is activated using the at least one button.

14. The electronic device according to claim 1, further comprising:
a display comprising at least one user selectable graphical icon; and
wherein registration is activated by selecting one of the at least one user selectable graphical icon.

15. The electronic device according to claim 1, wherein the electronic device displays a scheduled time of the customer care call, following registration.

16. The electronic device according to claim 15, wherein the scheduled time is determined by the at least one remote server.

17. The electronic device according to claim 15, wherein the at least one remote server coordinates placement of the customer care call at the scheduled time.

18. The electronic device according to claim 1, wherein the electronic device comprises one of the following: a cellular telephone, a personal digital assistant, a pager, and a personal computer.

19. A self-care portal supporting user self-care of mobile electronic devices, the comprising:
at least one server communicatively coupled to at least one mobile electronic device;
at least one memory comprising machine-readable code executable by the at least one server, the machine-readable code causing the at least one server to implement at least one web page that allows user self-care of the at least one mobile electronic device; and
wherein the machine-readable code enables user registration, via the at least one web page, to solicit a customer service call.

20. The self-care portal according to claim 19, wherein the at least one web page comprises an input device to initiate communication of a device profile from the at least one mobile electronic device to the at least one server.

21. The self-care portal according to claim 20, wherein the input device comprises one of the following: a user selectable graphic and a keystroke sequence.

22. The self-care portal according to claim 20, further comprising:
at least one interface for communication with a customer care system; and
wherein the self-care portal enables customer registration for customer care via a dedicated web page input device that, when activated, causes registration for customer service with the customer care system.

23. The self-care portal according to claim 22, wherein the self-care portal communicates a device profile to the customer care system via the at least one interface.

24. The self-care portal according to claim 23, wherein the self-care portal communicates a request, via the at least one interface, to provide customer care service to the at least one mobile electronic device.

25. The self-care portal according to claim 19, wherein self-care comprises one of the following: diagnosis of the at least one mobile electronic device, update of memory in the at least one mobile electronic device, backup of memory of the at least one mobile electronic device, communication of a device profile from the at least one mobile electronic device, and one of the following: backup and restore of configuration information for the at least one mobile electronic device.

26. The self-care portal according to claim 19, wherein the customer service call is queued for a later time, and wherein the later time is communicated to the user performing the registration.

27. The self-care portal according to claim 26, wherein the later time is communicated using one of the following: the at least one web page and the at least one mobile electronic device.

28. The self-care portal according to claim 19, wherein the machine-readable code enables user registration, via a user input device on the at least one mobile electronic device, to solicit a customer service call.

29. The self-care portal according to claim 28, wherein the user input device comprises one of the following: a user selectable graphic, a dedicated button, and a keystroke sequence.

30. A method of providing customer care to an electronic device in a network, the method comprising:
receiving, from the electronic device, a request for customer care;
determining at least one potential problem in the electronic device, based upon the received request; and
providing customer care to the customer associated with the electronic device.

31. The method according to claim 30, further comprising:
communicating details of the at least one potential problem to the electronic device.

32. The method according to claim 31, wherein the communicating comprises establishing a voice call between a customer care system and the electronic device to enable a customer care representative associated with the customer care system to provide customer care to a user of the electronic device.

33. The method according to claim 30, wherein the request for customer care is initiated by a predefined user action at the electronic device.

34. The method according to claim 33, wherein the predefined user action comprises one of the following: selecting a dedicated graphic, activating a predefined key sequence, and activating a dedicated button.

35. The method according to claim 30, wherein the electronic device determines whether the at least one potential problem is present in the electronic device, before sending the request for customer care.

36. The method according to claim 30 wherein the request for customer care is accompanied by automatic communication of a device profile.

37. The method according to claim 36, wherein user permission is solicited before device profile information is communicated.

38. The method according to claim 36, wherein the device profile comprises information about at least one of the following: hardware of the electronic device, application software of the electronic device, an operating system of the electronic device, firmware in the electronic device, memory in the electronic device, a subscriber, localization, connectivity, and usage of the electronic device.
